# FASCICULE DE BREVET EUROPEEN

(11) **EP 3 016 298 B1**
(45) Date de publication et mention de la délivrance du brevet: **13.12.2017**
(21) Numéro de dépôt: 15191605.3
(22) Date de dépôt: 27.10.2015
(51) Int. Cl.: H04B 7/06, H04B 7/12

(54) **PROCÉDÉ DE GESTION DE LA DIVERSITÉ SPATIALE ET FRÉQUENTIELLE DE LIAISONS RADIO**
VERFAHREN ZUR STEUERUNG DER RAUM- UND FREQUENZDIVERSITY VON FUNKVERBINDUNGEN
METHOD FOR MANAGING THE SPATIAL AND FREQUENCY DIVERSITY OF RADIO LINKS

(30) Priorité: 29.10.2014 FR 1460372
(43) Date de publication de la demande: 04.05.2016
(73) Titulaire: Delta Dore, 35270 Bonnemain (FR)
(72) Inventeur: Leduc, Benoît, 35270 BONNEMAIN (FR); Chouane, Philippe, 35270 BONNEMAIN (FR); Berhault, Gilles, 35270 BONNEMAIN (FR); Rouxel, Yann, 35270 BONNEMAIN (FR)
(74) Mandataire: Le Guen-Maillet

(56) Documents cités:
- WO-A1-95/30290
- WO-A1-2013/007902
- WO-A2-2008/135975
- US-A1- 2007 254 662

## Description

La présente invention concerne un procédé et un système de gestion de la diversité spatiale et fréquentielle de liaisons radio entre des capteurs, un dispositif centralisé et un dispositif d'actionnement situés dans un bâtiment dans lequel les ondes radio sont soumises à des évanouissements.

Dans les systèmes d'alarme anti intrusion, de domotique ou de gestion de la température dans un bâtiment, certains dispositifs tels que des capteurs, des transmetteurs, des sirènes, le ou les dispositifs centralisés qui gèrent le système, utilisent le médium radio comme moyen de communication entre eux.

Ces systèmes sont placés à l'intérieur de bâtiments.

Dans un bâtiment, la propagation radio subit de nombreuses altérations, parmi elles, l'évanouissement dû aux trajets multiples a un impact important sur la robustesse du système de transmission.

Selon les conditions, ce phénomène peut dégrader la transmission à des distances faibles par rapport à la portée intrinsèque du système, annihilant la transmission à quelques mètres quand la portée maximale est de plusieurs dizaines de mètres.

Néanmoins, une gestion optimisée de la qualité de la transmission de messages entre ceux-ci est nécessaire.

La demande de brevet WO 95/30290 divulgue un procédé de gestion de la diversité spatiale ou fréquentielle de liaisons radio entre un dispositif centralisé et un dispositif d'actionnement dans lequel les ondes radio sont soumises à des évanouissements.

La demande de brevet US2007/254662 divulgue le transfert de messages d'acquittement sur des porteuses distinctes, le choix des porteuses étant effectué en fonction de qualité de canal mesurée.

La demande de brevet WO 2013/30290 divulgue un dispositif d'extinction d'incendie.

La demande de brevet WO 2008/135975 divulgue un procédé de communication dans lequel un premier message de liaison montante est transmis par un premier noeud distant vers un noeud central dans un système de communication sans fil selon un schéma de saut de fréquence.

La présente invention a pour but de résoudre les inconvénients de l'art antérieur en proposant un procédé et un système de gestion de la diversité spatiale et fréquentielle de liaisons radio entre des capteurs, un dispositif centralisé et un dispositif d'actionnement situés dans un bâtiment qui apporte une solution simple et peu coûteuse au problème lié aux évanouissements des ondes radio.

A cette fin, selon un premier aspect, l'invention propose un procédé de gestion de la diversité spatiale et fréquentielle de liaisons radio entre des capteurs, un dispositif centralisé et un dispositif d'actionnement situés dans un bâtiment dans lequel les ondes radio sont soumises à des évanouissements, les capteurs, le dispositif centralisé et le dispositif d'actionnement émettant des messages dans une première et une seconde bandes de fréquences distinctes, caractérisé en ce que le procédé comporte les étapes de :
- transfert, par un capteur, d'un message dans la première bande de fréquence par l'intermédiaire d'une antenne du capteur,
- transfert du message dans la seconde bande de fréquence par l'intermédiaire de l'antenne du capteur si un accusé de réception au message n'est pas reçu par le capteur en réponse au message transmis dans la première bande de fréquence,
- transfert, par le dispositif centralisé d'un autre message dans la première bande de fréquence par l'intermédiaire d'une première antenne du dispositif centralisé,
- transfert, par le dispositif centralisé, de l'autre message dans la seconde bande de fréquence par l'intermédiaire d'une seconde antenne du dispositif centralisé si un accusé de réception au message n'est pas reçu par le dispositif centralisé en réponse au message transmis dans la première bande de fréquence, la première et la seconde antennes étant séparées par une distance prédéterminée.

La présente invention concerne aussi un système de gestion de la diversité spatiale et fréquentielle de liaisons radio entre des capteurs, un dispositif centralisé et un dispositif d'actionnement situés dans un bâtiment dans lequel les ondes radio sont soumises à des évanouissements, les capteurs, le dispositif centralisé et le dispositif d'actionnement émettant des messages dans une première et une seconde bandes de fréquences distinctes, caractérisé en ce que le système comporte :
- des moyens de transfert, compris dans un capteur, d'un message dans la première bande de fréquence par l'intermédiaire d'une antenne du capteur,
- des moyens de transfert, compris dans un capteur, du message dans la seconde bande de fréquence par l'intermédiaire de l'antenne du capteur si un accusé de réception au message n'est pas reçu par le capteur en réponse au message transmis dans la première bande de fréquence,
- des moyens de transfert, compris dans le dispositif centralisé, d'un autre message dans la première bande de fréquence par l'intermédiaire d'une première antenne du dispositif centralisé,
- des moyens de transfert, compris dans le dispositif centralisé, de l'autre message dans la seconde bande de fréquence par l'intermédiaire d'une seconde antenne du dispositif centralisé si un accusé de réception au message n'est pas reçu par le dispositif centralisé en réponse au message transmis dans la première bande de fréquence, la première et la seconde antennes étant séparées par une distance prédéterminée.

Ainsi, la présente invention est robuste aux problèmes liés aux évanouissements dans un bâtiment. La qualité de la transmission de messages est ainsi optimisée.

En ayant des capteurs ne disposant que d'une seule antenne, l'encombrement et le coût de ceux-ci est minimisé. Le placement de capteurs dans le bâtiment n'est plus limité par d'éventuels évanouissements des ondes radio.

Selon un mode particulier de l'invention, le procédé comporte les étapes de :
- transfert, par le dispositif centralisé, d'un message d'acquittement dans la première bande de fréquence par l'intermédiaire de la première antenne du dispositif centralisé au capteur si le message est reçu dans la première bande de fréquence,
- transfert, par le dispositif centralisé, d'un message d'acquittement dans la seconde bande de fréquence par l'intermédiaire de la seconde antenne du dispositif centralisé au capteur si le message est reçu dans la seconde bande de fréquence.

Ainsi, la seconde bande de fréquence n'est utilisée uniquement lorsqu'un problème d'évanouissement apparaît dans la première bande de fréquence. Ceci est particulièrement avantageux lorsque la seconde bande de fréquence est utilisée par d'autres systèmes.

Selon un mode particulier de l'invention, le procédé comporte les étapes de :
- transfert, par le dispositif d'actionnement, d'un message d'acquittement dans la première bande de fréquence par l'intermédiaire de la première antenne du dispositif d'actionnement au dispositif centralisé si l'autre message est reçu dans la première bande de fréquence,
- transfert, par le dispositif d'actionnement, d'un message d'acquittement dans la seconde bande de fréquence par l'intermédiaire de la seconde antenne du dispositif d'actionnement au dispositif centralisé si l'autre message est reçu dans la seconde bande de fréquence.

Ainsi, la seconde bande de fréquence n'est utilisée uniquement lorsqu'un problème d'évanouissement apparaît dans la première bande de fréquence. Ceci est particulièrement avantageux lorsque la seconde bande de fréquence est utilisée par d'autres systèmes.

Selon un mode particulier de l'invention, la première bande de fréquence est comprise entre 868MHz et 868,6MHz et la seconde bande de fréquence est comprise entre 868,7MHz et 869,2MHz.

Ainsi, les bandes de fréquence étant proches, il n'est pas nécessaire d'utiliser des antennes bi bandes qui ont un encombrement plus important. Les deux bandes de fréquence étant proches, il peut apparaître des situations dans lesquelles des évanouissements apparaissent dans les deux bandes de fréquence. Grâce à la diversité spatiale des antennes dans le dispositif centralisé ou les dispositifs d'actionnement, le problème lié aux évanouissements simultanés est résolu par la présente invention.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système dans lequel la présente invention est implémentée ;
la Fig. 2 représente un exemple d'architecture d'un dispositif de gestion de la diversité spatiale et fréquentielle selon la présente invention ;
la Fig. 3 représente un exemple d'architecture d'un dispositif de gestion de la diversité fréquentielle selon la présente invention ;
la Fig. 4 représente un exemple d'antenne utilisée dans la présente invention ;
la Fig. 5 représente un exemple d'algorithme exécuté par le dispositif de gestion de la diversité spatiale et fréquentielle selon la présente invention ;
la Fig. 6 représente un exemple d'algorithme exécuté par le dispositif de gestion de la diversité fréquentielle selon la présente invention ;

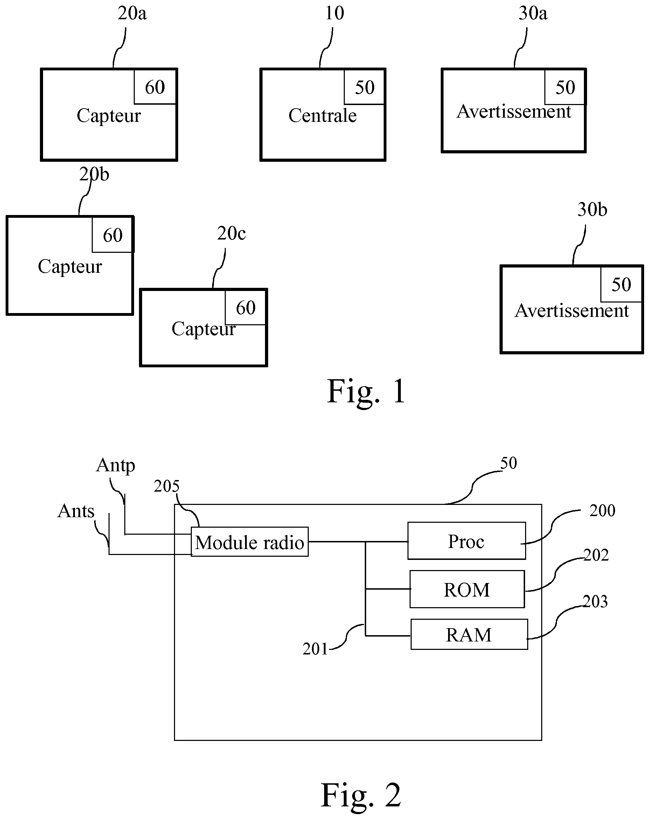

La **Fig. 1** représente un système dans lequel la présente invention est implémentée.

Le système comporte une pluralité de capteurs notés 20a, à 20c, un dispositif centralisé 10 et deux dispositifs d'actionnement notés 30a et 30b.

Le dispositif centralisé 10 est par exemple une centrale d'alarme ou une centrale domotique ou une centrale de régulation de la température d'un bâtiment.

Les capteurs 20 sont par exemple des détecteurs d'ouvertures ou périmétriques, des détecteurs de mouvements, des claviers, des écrans, des capteurs de température, de luminosité...

Les dispositifs d'actionnement 30 sont par exemple, une sirène, un transmetteur, des dispositifs de commande de chauffage, d'ouverture de volet occultant.

Dans la Fig. 1, cinq dispositifs 20 et 30 sont représentés. Le système peut comporter un nombre réduit ou plus important de capteurs 20 ou de dispositifs d'actionnement 30. Par exemple, le dispositif centralisé 10 est apte à gérer entre un et cinquante capteurs 20 et/ou dispositifs d'actionnement 30.

Le dispositif centralisé 10 doit être apte à recevoir de multiples messages des capteurs 20. Les dispositifs d'actionnement 30 doivent être en mesure de répondre dans les délais les plus brefs à une consigne envoyée par le dispositif centralisé 10. Une gestion optimisée de la qualité de la transmission de messages entre ceux-ci est donc nécessaire.

Les capteurs 20 comportent un dispositif de gestion de la diversité fréquentielle 60.

Le dispositif centralisé 10 et les dispositifs d'actionnement 30 comportent un dispositif de gestion de la diversité spatiale et fréquentielle 50.

Selon la présente invention, dans le système selon la présente invention :
- un capteur transfère un message dans la première bande de fréquence par l'intermédiaire d'une antenne du capteur,
- le capteur transfère le message dans la seconde bande de fréquence par l'intermédiaire de l'antenne du capteur si un accusé de réception au message n'est pas reçu par le capteur en réponse au message transmis dans la première bande de fréquence,
- le dispositif centralisé transfère un autre message dans la première bande de fréquence par l'intermédiaire d'une première antenne du dispositif centralisé,
- le dispositif centralisé transfère l'autre message dans la seconde bande de fréquence par l'intermédiaire d'une seconde antenne du dispositif centralisé si un accusé de réception au message n'est pas reçu par le dispositif centralisé en réponse au message transmis dans la première bande de fréquence, la première et la seconde antennes étant séparées par une distance prédéterminée.

La **Fig. 2** représente un exemple d'architecture d'un dispositif de gestion de la diversité spatiale et fréquentielle selon la présente invention.

Le dispositif de gestion de la diversité spatiale et fréquentielle 50 selon la présente invention comprend :
- un processeur, micro-processeur, ou microcontrôleur 200 ;
- une mémoire volatile 203 ;
- une mémoire non volatile 202;
- une interface radio 205 bidirectionnelle ;
- un bus de communication reliant le processeur 200 à la mémoire ROM 203, à la mémoire RAM 203 et un module radio 205.

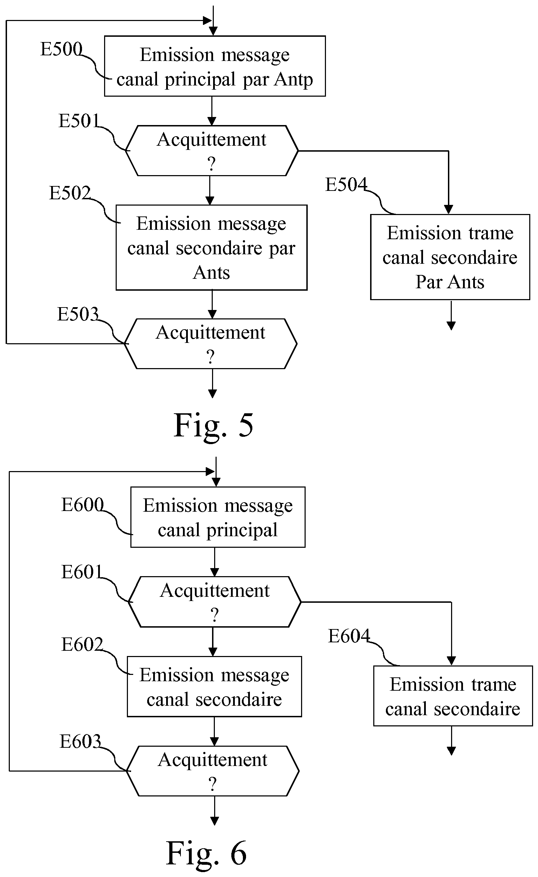

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de gestion de la diversité spatiale et fréquentielle 50 est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Selon la présente invention, l'interface radio 205 comporte deux chaînes d'émission de messages, une première chaîne d'émission dite principale comprenant une antenne Antp et une seconde chaîne d'émission dite secondaire comprenant une antenne Ants. L'interface radio 205 comporte deux chaînes de réception de messages, une première chaîne de réception dite principale reliée à l'antenne Antp et une seconde chaîne de réception dite secondaire reliée à l'antenne Ants.

Les antennes Antp et Ants sont placées sur un même plan et sont espacées, par exemple d'une distance comprise entre 10 et 18 cm, préférentiellement d'une distance de 14cm et opèrent dans une bande de fréquence comprenant les bandes de fréquences 868MHz à 868,6MHz et 868,7MHz à 869,2MHz.

Le système utilise deux canaux de communication dans la bande ISM 868 MHz.

Les chaînes d'émission et de réception principales opèrent dans une bande de fréquence comprise entre 868MHz et 868,6MHz.

Les chaînes d'émission et de réception secondaires opèrent dans une bande de fréquence comprise entre 868,7MHz et 869,2MHz.

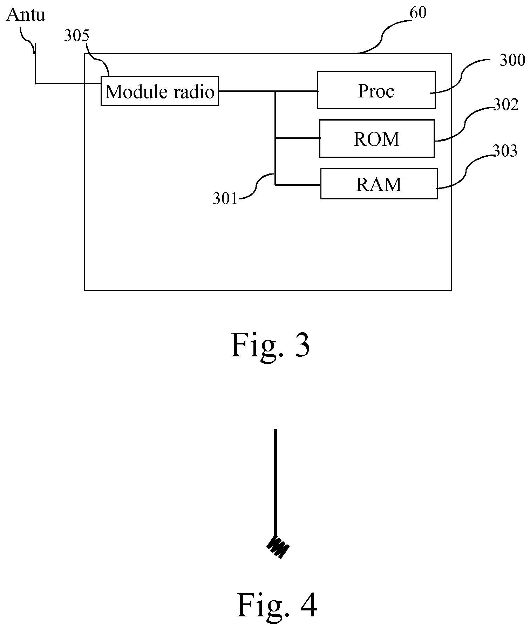

La **Fig. 3** représente un exemple d'architecture d'un dispositif de gestion de la diversité fréquentielle selon la présente invention.

Le dispositif de gestion de la diversité fréquentielle 60 selon la présente invention comprend :
- un processeur, micro-processeur, ou microcontrôleur 300 ;
- une mémoire volatile 303 ;
- une mémoire non volatile 302;
- une interface radio 305 bidirectionnelle ;
- un bus de communication reliant le processeur 300 à la mémoire ROM 303, à la mémoire RAM 303 et un module radio 305.

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le dispositif de gestion de la diversité fréquentielle 50 est mis sous tension, le processeur 300 est capable de lire de la mémoire volatile 203 des instructions et de les exécuter. Ces instructions forment un programme d'ordinateur qui cause la mise en oeuvre, par le processeur 300, de tout ou partie du procédé décrit en relation avec la Fig. 6.

Tout ou partie du procédé décrit en relation avec la Fig. 6 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Selon la présente invention, l'interface radio 305 comporte un oscillateur dont la fréquence est modifiée selon que l'on désire émettre ou recevoir un message dans le canal principal ou le canal secondaire par l'intermédiaire de l'antenne Antu.

L'antenne Antu opère dans une bande de fréquence comprenant les bandes de fréquences 868MHz à 868,6MHz et 868,7MHz à 869,2MHz.

Le système utilise deux canaux de communication dans la bande ISM 868 MHz.

Les émissions et les réceptions dans le canal principal opèrent dans une bande de fréquence comprise entre 868MHz et 868,6MHz.

Les émissions et les réceptions dans le canal secondaire opèrent dans une bande de fréquence comprise entre 868,7MHz et 869,2MHz.

La **Fig. 4** représente un exemple d'antenne utilisée dans la présente invention.

Les antennes Antu, Antp et Ants ont une forme identique. Par exemple, chaque antenne est constituée d'une inductance d'un enroulement d'une longueur de 40 mm et d'un brin d'une longueur de 34 mm.

La **Fig. 5** représente un exemple d'algorithme exécuté par le dispositif de gestion de la diversité spatiale et fréquentielle selon la présente invention.

Plus précisément, le présent algorithme est exécuté par le processeur 200 du dispositif de gestion de la diversité spatiale et fréquentielle.

A l'étape E500, le processeur 200 commande l'émission d'un message sur le canal principal par l'intermédiaire de la chaîne d'émission principale du module radio 205 et de l'antenne Antp. Le message est par exemple constitué d'un préambule d'une durée de 250 ms suivi de trois trames de données d'une durée respective de 10ms.

A l'étape suivante E501, le processeur 200 vérifie si un acquittement du message envoyé à l'étape E500 est reçu par l'intermédiaire de la chaîne de réception principale du module radio 205 et de l'antenne Antp.

Dans l'affirmative, le processeur 200 passe à l'étape E504. Dans la négative, le processeur 200 passe à l'étape E501.

A l'étape E501, le processeur 200 commande l'émission de trois trames de données sur le canal secondaire par l'intermédiaire de la chaîne d'émission secondaire du module radio 205 et de l'antenne Ants. Les trames de données envoyées sur le canal secondaires sont identiques aux trois trames de données envoyées sur le canal principal.

Cette opération exécutée, le processeur 200 interrompt le présent algorithme et attend qu'un nouveau message soit à envoyer pour exécuter une nouvelle fois celui-ci.

A l'étape E502, le processeur 200 commande l'émission d'un message sur le canal secondaire par l'intermédiaire de la chaîne d'émission secondaire du module radio 205 et de l'antenne Ants. Le message est par exemple constitué d'un préambule d'une durée de 250 ms suivi de trois trames de données d'une durée respective de 10ms.

A l'étape suivante E503, le processeur 200 vérifie si un acquittement du message envoyé à l'étape E502 est reçu par l'intermédiaire de la chaîne de réception secondaire du module radio 205 et de l'antenne Ants.

Dans l'affirmative, le processeur 200 interrompt le présent algorithme et attend qu'un nouveau message soit à envoyer pour exécuter une nouvelle fois celui-ci.

Dans la négative, le processeur 200 retourne à l'étape E500.

La **Fig. 6** représente un exemple d'algorithme exécuté par le dispositif de gestion de la diversité fréquentielle selon la présente invention.

Plus précisément, le présent algorithme est exécuté par le processeur 300 du dispositif de gestion de la diversité fréquentielle.

A l'étape E600, le processeur 300 commande l'émission d'un message sur le canal principal par l'intermédiaire de l'antenne Antu. Le message est par exemple constitué d'un préambule d'une durée de 250 ms suivi de trois trames de données d'une durée respective de 10ms.

A l'étape suivante E601, le processeur 300 vérifie si un acquittement du message envoyé à l'étape E600 est reçu par l'intermédiaire du module radio 305 et de l'antenne Antu.

Dans l'affirmative, le processeur 300 passe à l'étape E604. Dans la négative, le processeur 300 passe à l'étape E601.

A l'étape E601, le processeur 300 commande l'émission de trois trames de données sur le canal secondaire par l'intermédiaire du module radio 305 et de l'antenne Antu. Les trames de données envoyées sur le canal secondaire sont identiques aux trois trames de données envoyées sur le canal principal.

Cette opération exécutée, le processeur 300 interrompt le présent algorithme et attend qu'un nouveau message soit à envoyer pour exécuter une nouvelle fois celui-ci.

A l'étape E602, le processeur 300 commande l'émission d'un message sur le canal secondaire par l'intermédiaire du module radio 305 et de l'antenne Antu. Le message est par exemple constitué d'un préambule d'une durée de 250 ms suivi de trois trames de données d'une durée respective de 10ms.

A l'étape suivante E603, le processeur 300 vérifie si un acquittement du message envoyé à l'étape E602 est reçu par l'intermédiaire du module radio 305 et de l'antenne Antu.

Dans l'affirmative, le processeur 300 interrompt le présent algorithme et attend qu'un nouveau message soit à envoyer pour exécuter une nouvelle fois celui-ci.

Dans la négative, le processeur 300 retourne à l'étape E600.

Bien entendu, la présente invention n'est nullement limitée aux modes de réalisation décrits ici, mais englobe, bien au contraire, toute variante à la portée de l'homme du métier.

## Revendications

1. Procédé de gestion de la diversité spatiale et fréquentielle de liaisons radio entre des capteurs, un dispositif centralisé et un dispositif d'actionnement situés dans un bâtiment dans lequel les ondes radio sont soumises à des évanouissements, les capteurs, le dispositif centralisé et le dispositif d'actionnement émettant des messages dans une première et une seconde bandes de fréquences distinctes, **caractérisé en ce que** le procédé comporte les étapes de :
- transfert, par un capteur, d'un message dans la première bande de fréquence par l'intermédiaire d'une antenne du capteur,
- transfert du message dans la seconde bande de fréquence par l'intermédiaire de l'antenne du capteur si un accusé de réception au message n'est pas reçu par le capteur en réponse au message transmis dans la première bande de fréquence,
- transfert, par le dispositif centralisé (E500), d'un autre message dans la première bande de fréquence par l'intermédiaire d'une première antenne du dispositif centralisé,
- transfert, par le dispositif centralisé (E504), de l'autre message dans la seconde bande de fréquence par l'intermédiaire d'une seconde antenne du dispositif centralisé si un accusé de réception au message n'est pas reçu par le dispositif centralisé en réponse au message transmis dans la première bande de fréquence, la première et la seconde antennes étant séparées par une distance prédéterminée.

2. Procédé selon la revendication 1, **caractérisé en ce que** le procédé comporte les étapes de :
- transfert, par le dispositif centralisé, d'un message d'acquittement dans la première bande de fréquence par l'intermédiaire de la première antenne du dispositif centralisé au capteur si le message est reçu dans la première bande de fréquence,
- transfert, par le dispositif centralisé, d'un message d'acquittement dans la seconde bande de fréquence par l'intermédiaire de la seconde antenne du dispositif centralisé au capteur si le message est reçu dans la seconde bande de fréquence.

3. Procédé selon la revendication 1 ou 2, **caractérisé en ce que** le procédé comporte les étapes de :
- transfert, par le dispositif d'actionnement, d'un message d'acquittement dans la première bande de fréquence par l'intermédiaire de la première antenne du dispositif d'actionnement au dispositif centralisé si l'autre message est reçu dans la première bande de fréquence,
- transfert, par le dispositif d'actionnement, d'un message d'acquittement dans la seconde bande de fréquence par l'intermédiaire de la seconde antenne du dispositif d'actionnement au dispositif centralisé si l'autre message est reçu dans la seconde bande de fréquence.

4. Procédé selon l'une quelconque des revendications 1 à 3, **caractérisé en ce que** la première bande de fréquence est comprise entre 868MHz et 868,6MHz et la seconde bande de fréquence est comprise entre 868,7MHz et 869,2MHz.

5. Système de gestion de la diversité spatiale et fréquentielle de liaisons radio entre des capteurs, un dispositif centralisé et un dispositif d'actionnement situés dans un bâtiment dans lequel les ondes radio sont soumises à des évanouissements, les capteurs, le dispositif centralisé et le dispositif d'actionnement émettant des messages dans une première et une seconde bandes de fréquences distinctes, **caractérisé en ce que** le système comporte :
- des moyens de transfert, compris dans un capteur, d'un message dans la première bande de fréquence par l'intermédiaire d'une antenne du capteur,
- des moyens de transfert, compris dans un capteur, du message dans la seconde bande de fréquence par l'intermédiaire de l'antenne du capteur si un accusé de réception au message n'est pas reçu par le capteur en réponse au message transmis dans la première bande de fréquence,
- des moyens de transfert, compris dans le dispositif centralisé, d'un autre message dans la première bande de fréquence par l'intermédiaire d'une première antenne du dispositif centralisé,
- des moyens de transfert, compris dans le dispositif centralisé, dans la seconde bande de fréquence par l'intermédiaire d'une seconde antenne du dispositif centralisé si un accusé de réception au message n'est pas reçu par le dispositif centralisé en réponse au message transmis dans la première bande de fréquence, la première et la seconde antennes étant séparées par une distance prédéterminée.

6. Système **caractérisé en ce que** le système est un système d'alarme anti intrusion, de domotique ou de gestion de la température dans un bâtiment.

## Patentansprüche

1. Verfahren zur Verwaltung der Raum- und Frequenzdiversität von Funkverbindungen zwischen Sensoren, einer Zentralvorrichtung und einer Betätigungsvorrichtung, die sich in einem Gebäude befinden, in dem die Funkwellen Schwunderscheinungen ausgesetzt sind, wobei die Sensoren, die Zentralvorrichtung und die Betätigungsvorrichtung Nachrichten in einem ersten und einem zweiten separaten Frequenzband entsenden, **dadurch gekennzeichnet, dass** das Verfahren die folgenden Schritte umfasst:
- durch einen Sensor Übertragung einer Nachricht in dem ersten Frequenzband unter Vermittlung einer Antenne des Sensors,
- Übertragung der Nachricht in dem zweiten Frequenzband unter Vermittlung der Antenne des Sensors, wenn vom Sensor als Antwort auf die in dem ersten Frequenzband übertragene Nachricht keine Empfangsbestätigung für die Nachricht erhalten wurde,
- durch die Zentralvorrichtung (E500) Übertragung einer weiteren Nachricht in dem ersten Frequenzband unter Vermittlung einer ersten Antenne der Zentralvorrichtung,
- durch die Zentralvorrichtung (E504) Übertragung der weiteren Nachricht in dem zweiten Frequenzband unter Vermittlung einer zweiten Antenne der Zentralvorrichtung, wenn von der Zentralvorrichtung als Antwort auf die in dem ersten Frequenzband übertragene Nachricht keine Empfangsbestätigung für die Nachricht erhalten wurde, wobei die erste und die zweite Antenne durch einen vorbestimmten Abstand getrennt sind.

2. Verfahren nach Anspruch 1, **dadurch gekennzeichnet, dass** das Verfahren die folgenden Schritte umfasst:
- durch die Zentralvorrichtung Übertragung einer Quittierungsnachricht in dem ersten Frequenzband unter Vermittlung der ersten Antenne der Zentralvorrichtung an den Sensor, wenn die Nachricht in dem ersten Frequenzband empfangen wird,
- durch die Zentralvorrichtung Übertragung einer Quittierungsnachricht in dem zweiten Frequenzband unter Vermittlung der zweiten Antenne der Zentralvorrichtung an den Sensor, wenn die Nachricht in dem zweiten Frequenzband empfangen wird.

3. Verfahren nach Anspruch 1 oder 2, **dadurch gekennzeichnet, dass** das Verfahren die folgenden Schritte umfasst:
- durch die Betätigungsvorrichtung Übertragung einer Quittierungsnachricht in dem ersten Frequenzband unter Vermittlung der ersten Antenne der Betätigungsvorrichtung an die Zentralvorrichtung, wenn die weitere Nachricht in dem ersten Frequenzband empfangen wird,
- durch die Betätigungsvorrichtung Übertragung einer Quittierungsnachricht in dem zweiten Frequenzband unter Vermittlung der zweiten Antenne der Betätigungsvorrichtung an die Zentralvorrichtung, wenn die weitere Nachricht in dem zweiten Frequenzband empfangen wird.

4. Verfahren nach einem der Ansprüche 1 bis 3, **dadurch gekennzeichnet, dass** das erste Frequenzband zwischen 868 MHz und 868,6 MHz und das zweite Frequenzband zwischen 868,7 MHz und 869,2 MHz liegt.

5. System zur Verwaltung der Raum- und Frequenzdiversität von Funkverbindungen zwischen Sensoren, einer Zentralvorrichtung und einer Betätigungsvorrichtung, die sich in einem Gebäude befinden, in dem die Funkwellen Schwunderscheinungen ausgesetzt sind, wobei die Sensoren, die Zentralvorrichtung und die Betätigungsvorrichtung Nachrichten in einem ersten und einem zweiten separaten Frequenzband entsenden, **dadurch gekennzeichnet, dass** das System umfasst:
- in einem Sensor enthaltene Mittel zur Übertragung einer Nachricht in dem ersten Frequenzband unter Vermittlung einer Antenne des Sensors,
- in einem Sensor enthaltene Mittel zur Übertragung der Nachricht in dem zweiten Frequenzband unter Vermittlung der Antenne des Sensors, wenn vom Sensor als Antwort auf die in dem ersten Frequenzband übertragene Nachricht keine Empfangsbestätigung für die Nachricht erhalten wurde,
- in der Zentralvorrichtung enthaltene Mittel zur Übertragung einer weiteren Nachricht in dem ersten Frequenzband unter Vermittlung einer ersten Antenne der Zentralvorrichtung,
- in der Zentralvorrichtung enthaltene Mittel zur Übertragung in dem zweiten Frequenzband unter Vermittlung einer zweiten Antenne der Zentralvorrichtung, wenn von der Zentralvorrichtung als Antwort auf die in dem ersten Frequenzband übertragene Nachricht keine Empfangsbestätigung für die Nachricht erhalten wurde, wobei die erste und die zweite Antenne durch einen vorbestimmten Abstand getrennt sind.

6. System, **dadurch gekennzeichnet, dass** das System ein Einbruchsüberwachungs-, Haustechnikkontroll- oder Temperatursteuerungssystem in einem Gebäude ist.

## Claims

1. Method for managing the space and frequency diversity of radio links between sensors, a centralized device and an actuation device that are situated in a building in which the radio waves are subjected to fading effects, the sensors, the centralized device and the actuation device emitting messages in a first and a second distinct frequency bands, **characterized in that** the method comprises the steps of:
- transfer, by a sensor, of a message in the first frequency band via an antenna of the sensor,
- transfer of the message in the second frequency band via the antenna of the sensor if an acknowledgement of receipt of the message is not received by the sensor in response to the message transmitted in the first frequency band,
- transfer, by the centralized device (E500), of another message in the first frequency band via a first antenna of the centralized device,
- transfer, by the centralized device (E504), of the other message in the second frequency band via a second antenna of the centralized device if an acknowledgement of receipt of the message is not received by the centralized device in response to the message transmitted in the first frequency band, the first and the second antennas being separated by a predetermined distance.

2. Method according to Claim 1, **characterized in that** the method comprises the steps of:
- transfer, by the centralized device, of an acknowledgement message in the first frequency band via the first antenna of the centralized device to the sensor if the message is received in the first frequency band,
- transfer, by the centralized device, of an acknowledgment message in the second frequency band via the second antenna of the centralized device to the sensor if the message is received in the second frequency band.

3. Method according to Claim 1 or 2, **characterized in that** the method comprises the steps of:
- transfer, by the actuation device, of an acknowledgement message in the first frequency band via the first antenna of the actuation device to the centralized device if the other message is received in the first frequency band,
- transfer, by the actuation device, of an acknowledgment message in the second frequency band via the second antenna of the actuation device to the centralized device if the other message is received in the second frequency band.

4. Method according to any one of Claims 1 to 3, **characterized in that** the first frequency band lies between 868 MHz and 868.6 MHz and the second frequency band lies between 868.7 MHz and 869.2 MHz.

5. System for managing the space and frequency diversity of radio links between sensors, a centralized device and an actuation device that are situated in a building in which the radio waves are subjected to fading effects, the sensors, the centralized device and the actuation device emitting messages in a first and a second distinct frequency bands, **characterized in that** the system comprises:
- means, included in a sensor, for transferring a message in the first frequency band via an antenna of the sensor,
- means, included in a sensor, for transferring the message in the second frequency band via the antenna of the sensor if an acknowledgement of receipt of the message is not received by the sensor in response to the message transmitted in the first frequency band,
- means, included in the centralized device, for transferring another message in the first frequency band via a first antenna of the centralized device,
- means, included in the centralized device, for transferring in the second frequency band via a second antenna of the centralized device if an acknowledgement of receipt of the message is not received by the centralized device in response to the message transmitted in the first frequency band, the first and the second antennas being separated by a predetermined distance.

6. System, **characterized in that** the system is an anti-intrusion alarm, home automation or temperature management system in a building.
